(19) Europäisches Patentamt / European Patent Office / Office européen des brevets

(11) **EP 4 748 795 A1**

(12) **EUROPEAN PATENT APPLICATION**

(43) Date of publication:
**27.05.2026  Bulletin 2026/22**

(21) Application number: **25214411.8**

(22) Date of filing: **07.11.2025**

(51) International Patent Classification (IPC):
***C01G 53/05*** (2025.01)        ***C01G 53/42*** (2025.01)
***C01G 53/84*** (2025.01)

(52) Cooperative Patent Classification (CPC):
**C01G 53/05; C01G 53/42; C01G 53/84;**
C01P 2002/52; C01P 2002/54; C01P 2004/51;
C01P 2004/53; C01P 2004/61; C01P 2004/80;
C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.11.2024  KR 20240158062
06.11.2025  KR 20250166361**

(71) Applicant: **SK On Co., Ltd.
Seoul 03161 (KR)**

(72) Inventors:
• **SON, Byoung Ki
Daejeon 34124 (KR)**
• **LEE, Ha Eun
Daejeon 34124 (KR)**
• **CHOI, Jae Ho
Daejeon 34124 (KR)**
• **CHOI, Ji Hoon
Daejeon 34124 (KR)**

(74) Representative: **Stolmár & Partner
Patentanwälte PartG mbB
Blumenstraße 17
80331 München (DE)**

(54) **CATHODE ACTIVE MATERIAL PRECURSOR FOR LITHIUM SECONDARY BATTERY, METHOD OF PREPARING THE SAME, CATHODE ACTIVE MATERIAL FOR LITHIUM SECONDARY BATTERY AND LITHIUM SECONDARY BATTERY**

(57)    A cathode active material precursor for a lithium secondary battery according to embodiments of the present disclosure includes first cathode active material precursor particles, each comprising a core portion and a shell portion, the core portion and the shell portion each comprising one or more transition metals including nickel, and second cathode active material precursor particles comprising one or more transition metals including nickel. A molar fraction of nickel among the transition metals of the second cathode active material precursor particles is uniform throughout the entirety of each of the the second cathode active material precursor particles. A median particle diameter ($D_{50}$) of the core portion of the first cathode active material precursors particles is greater than a median particle diameter ($D_{50}$) of the second cathode active material precursor particles.

FIG. 1

EP 4 748 795 A1

**Description**

BACKGROUND

1. Field of the Invention

The present disclosure relates to a cathode active material precursor for a lithium secondary battery, a method of preparing the same, a cathode active material for a lithium secondary battery, and a lithium secondary battery including the cathode active material. More specifically, the present disclosure relates to a cathode active material precursor for a lithium secondary battery containing nickel, a method of preparing the same, a cathode active material for a lithium secondary battery, and a lithium secondary battery including the cathode active material.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, and a nickel-hydrogen battery. Among these, the lithium secondary battery is actively developed and applied due to its high operating voltage, high energy density per unit weight, and advantages in charging speed and weight reduction.

To improve the capacity properties of the lithium secondary battery, a high-nickel (high-Ni) lithium oxide having an increased nickel content may be used as a cathode active material included in the lithium secondary battery. The cathode active material may be prepared by reacting a transition metal-containing precursor with a lithium source.

However, the high-Ni lithium oxide may be structurally unstable. Therefore, there is a need to develop a transition metal-containing precursor that can enhance the capacity properties of secondary batteries while also improving their structural stability.

SUMMARY

An object of the present disclosure is to provide a cathode active material precursor for a lithium secondary battery that may improve the cycle life properties and initial efficiency of lithium secondary batteries.

Another object of the present disclosure is to provide a method of preparing the cathode active material precursor for a lithium secondary battery.

Still another object of the present disclosure is to provide a cathode active material for a lithium secondary battery formed from the cathode active material precursor.

Yet another object of the present disclosure is to provide a lithium secondary battery including the cathode active material for a lithium secondary battery.

A cathode active material precursor for a lithium secondary battery according to exemplary embodiments of the present disclosure includes: first cathode active material precursor particles, each including a core portion and a shell portion, the core portion and the shell portion each including one or more transition metals including nickel; and second cathode active material precursor particles comprising one or more transition metals including nickel. A molar fraction of nickel among the transition metals of the second cathode active material precursor particles is uniform throughout the entirety of each of the the second cathode active material precursor particles. A median particle diameter ($D_{50}$) of the core portion of the first cathode active material precursors particles is greater than a median particle diameter ($D_{50}$) of the second cathode active material precursor particles.

In some embodiments, a median particle diameter ($D_{50}$) of core portions of the first cathode active material precursor particles may be in a range from 8 $\mu$m to 13 $\mu$m .

In some embodiments, a median particle diameter ($D_{50}$) of the second cathode active material precursor particles may be in a range from 3 $\mu$m to 6 $\mu$m.

In some embodiments, an average molar fraction of nickel among the transition metals of the first cathode active material precursor particles may be greater than an average molar fraction of nickel among the transition metals of the second cathode active material precursor particles.

In some embodiments, the transition metals may further include cobalt and manganese.

A cathode active material for a lithium secondary battery according to exemplary embodiments includes lithium transition metal oxide particles formed from the above-described cathode active material precursor.

A lithium secondary battery according to exemplary embodiments includes: a cathode including the above-described cathode active material for a lithium secondary battery; an anode; and a separator interposed between the cathode and the anode.

According to a method of preparing a cathode active material precursor for a lithium secondary battery according to exemplary embodiments, a preliminary precursor is prepared by introducing a first transition metal source including nickel into a first reactor. A first cathode active material precursor having a core-shell structure is prepared by introducing the preliminary precursor and a second transition metal source including nickel into a second reactor. A second cathode active material precursor having a uniform nickel content throughout an particle is prepared in at least one of the first reactor and the second reactor. Each of the first reactor and the second reactor are a continuous stirred tank reactor (CSTR) or a batch reactor, and the first reactor and the second reactor are different reactors from each other.

In some embodiments, the first reactor may be the batch reactor, the second reactor may be the continuous stirred tank reactor (CSTR), and preparing the second cathode active material precursor may be performed along with preparing the first cathode active material precursor in the second reactor.

In some embodiments, preparing the second cathode active material precursor may be performed along with forming a shell portion of the first cathode active material precursor.

In some embodiments, the first reactor may be the continuous stirred tank reactor (CSTR), the second reactor may be the batch reactor, and a first preliminary precursor and a second preliminary precursor, having different median particle diameters ($D_{50}$) from each other, may be prepared in the first reactor. The second preliminary precursor and the second transition metal source may be introduced into the second reactor to prepare the second cathode active material precursor.

In some embodiments, the first preliminary precursor and the second preliminary precursor prepared in the first reactor may be introduced together into the second reactor, and a shell portion may be formed only on the first preliminary precursor introduced into the second reactor to prepare the first cathode active material precursor.

In some embodiments, the first reactor may be the continuous stirred tank reactor (CSTR), and a content of nickel based on a total weight of the first transition metal source may be greater than a content of nickel based on a total weight of the second transition metal source.

In some embodiments, the first reactor may be the batch reactor, and a content of nickel based on a total weight of the first transition metal source may be lower than a content of nickel based on a total weight of the second transition metal source.

In some embodiments, the preliminary precursor may be introduced into an intermediate reactor before being introduced into the second reactor.

The cathode active material precursor for a lithium secondary battery according to exemplary embodiments of the present disclosure may have a bimodal particle size distribution. A cathode active material precursor for a lithium secondary battery having a large surface area may provide a secondary battery with improved charge/discharge efficiency, while a cathode active material precursor for a lithium secondary battery having a small surface area may provide a secondary battery with improved cycle life properties.

In addition, side reactions between the cathode active material for a lithium secondary battery formed from the cathode active material precursor according to exemplary embodiments of the present disclosure and an electrolyte may be reduced. Consequently, the cycle life properties and charge/discharge efficiency of the lithium secondary battery may be improved.

The lithium secondary battery of the present disclosure may be widely applied in electric vehicles, battery charging stations and green technology fields, such as solar power generation, wind power generation, and the like, which use the batteries. The cathode active material precursor for a lithium secondary battery of the present disclosure, the method of preparing the same, and the lithium secondary battery including the cathode active material may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a schematic view illustrating a device for preparing a cathode active material precursor according to exemplary embodiments.
FIGS. 2 and 3 are process flowcharts illustrating a method of preparing a cathode active material precursor according to exemplary embodiments.
FIGS. 4 and 5 are schematic plan and cross-sectional views, respectively, of a lithium secondary battery according to exemplary embodiments.

DETAILED DESCRIPTION

Embodiments of the present disclosure provide a cathode active material precursor for a lithium secondary battery (hereinafter, also abbreviated as "cathode active material precursor"), a cathode active material for a lithium secondary battery formed from the cathode active material precursor (hereinafter, also abbreviated as "cathode active material"), and a lithium secondary battery (hereinafter, also abbreviated as "secondary battery") including the same.

According to exemplary embodiments, the cathode active material precursor may include first cathode active material precursor particles and second cathode active material precursor particles. Each of the first cathode active material precursor particles may include a compound having a core-shell structure. Each of the second cathode active material precursor particles may include a compound having a non-core-shell structure. The charge/discharge properties of the secondary battery may be improved through the first cathode active material precursor particles, while the cycle life properties of the secondary battery may be improved through the second cathode active material precursor particles.

According to exemplary embodiments, each of the first cathode active material precursor particles may include a core portion including one or more transition metals including nickel and a shell portion including one or more transition metals including.

According to exemplary embodiments, the second cathode active material precursor particles may include one or more transition metals including nickel.

According to exemplary embodiments, a median particle diameter ($D_{50}$) of the core portion of the first cathode active material precursor particles may be greater than that of the second cathode active material precursor particles.

If the median particle diameter ($D_{50}$) of the core portion of the first cathode active material precursor particles decreases excessively, the shell portion may not be deposited on the core portion.

If the median particle diameter ($D_{50}$) of the second cathode active material precursor particles increases excessively, an additional transition metal layer may be formed on the surface of the second cathode active material precursor particles, thus departing from the non-core-shell structure.

By maintaining the median particle diameter ($D_{50}$) of core portions of the first cathode active material precursor particles greater than the median particle diameter ($D_{50}$) of the second cathode active material precursor particles, each of the first cathode active material precursor particles may be formed into a core-shell structure, and each of the second cathode active material precursor particles may be formed into a non-core-shell structure.

The term "median particle diameter ($D_{50}$)" as used herein may refer to the particle diameter at which the cumulative volume percentage in the particle size distribution reaches 50% based on particle volume. For example, $D_{50}$ may refer to the particle diameter measured using a particle size analyzer employing laser diffraction, corresponding to the particle diameter at a cumulative volume fraction of 50% when the particles in the measured distribution are accumulated from the smallest size.

In some embodiments, a median particle diameter ($D_{50}$) of the core portions of the first cathode active material precursor particles may be in a range from 8 μm to 13 μm, from 9 μm to 13 μm, from 9 μm to 12 μm, or from 9.5 μm to 11 μm. Within this range, transition metals may be stably deposited on the core portions. Therefore, each of the first cathode active material precursor particles may be formed in a core-shell structure, and the charge/discharge properties of the secondary battery may be improved.

In some embodiments, the median particle diameter ($D_{50}$) of the first cathode active material precursor particles may be in a range from 10 μm to 18 μm, from 12 μm to 18 μm, from 14 μm to 18 μm, or from 14 μm to 16 μm. Within this range, the average specific surface area of the first cathode active material precursor particles may sufficiently increase. Accordingly, the reaction area of the cathode active material formed from the first cathode active material precursor particles may increase. As a result, the charge/discharge properties of the secondary battery may be improved.

In some embodiments, a median particle diameter ($D_{50}$) of the second cathode active material precursor particles may be in a range from 3 μm to 6 μm, from 4 μm to 6 μm, or from 4 μm to 5 μm. Within this range, an additional transition metal layer may not be formed on the second cathode active material precursor particles. Accordingly, each of the second cathode active material precursor particles may maintain a non-core-shell structure, and the size of the cathode active material formed from the second cathode active material precursor particles may be small. Therefore, the cycle life properties of the secondary battery including the cathode active material may be improved.

In some embodiments, the transition metals may further include cobalt and manganese. For example, the transition metals included in the first cathode active material precursor particles may further include cobalt and manganese. For example, the transition metals included in the second cathode active material precursor particles may further include cobalt and manganese.

In some embodiments, the first cathode active material precursor particles and the second cathode active material precursor particles may include a transition metal hydroxide represented by Formula 1 below.

[Formula 1] $\quad$ $Ni_{a1}M_{b1}(OH)_{2+c1}$

In Formula 1, a1, b1 and c1 may satisfy $0.6 \leq a1 \leq 0.99$, $0.01 \leq b1 \leq 0.4$, and $-0.5 \leq c1 \leq 0.1$. As described above, M may include Co and/or Mn.

The chemical structure represented by Formula 1 indicates a bonding relationship between elements included in the layered structure or the crystal structure of the cathode active material precursor, and does not exclude other additional elements. For example, M includes Co and/or Mn, and Co and/or Mn may be provided as main active elements of the cathode active material precursor together with Ni. Here, it should be understood that Formula 1 is provided to express the bonding relationship between the main active elements, and is a formula encompassing the introduction and substitution of additional elements.

In one embodiment, the cathode active material precursor may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material formed from the cathode active material precursor together with Co or Mn, such as Al.

In one embodiment, the auxiliary element may include at least one selected from the group consisting of Al, Ti, W, Sr, Zr, Ta, Nb, Mo and B. Accordingly, the capacity/output properties of the cathode active material formed from the cathode active material precursor may be further improved.

For example, the cathode active material precursor or the transition metal hydroxide may be represented by Formula 1-1 below.

$$[\text{Formula 1-1}] \qquad Ni_{a1}M1_{b11}M2_{b12}(OH)_{2+c1}$$

In Formula 1-1, M1 may include Co and/or Mn. M2 may include the above-described auxiliary elements. In Formula 1-1, a1, b11, b12 and c1 may satisfy $0.6 \leq a1 \leq 0.99$, $0.01 \leq b11+b12 \leq 0.4$, and $-0.5 \leq c1 \leq 0.1$.

The cathode active material precursor may include a nickel-cobalt-manganese (NCM)-based hydroxide. In this case, an NCM-based hydroxide with an increased nickel content may be used.

Nickel (Ni) may be provided as a transition metal associated with the output and capacity of the lithium secondary battery. Therefore, as described above, by preparing a cathode active material and a secondary battery from the cathode active material precursor having a high-nickel-content (high-Ni) composition, a high-capacity cathode and a high-capacity lithium secondary battery may be provided.

However, as the Ni content increases, long-term storage stability and cycle life stability of the cathode or the secondary battery may be relatively reduced, and side reactions with the electrolyte may also increase. However, according to exemplary embodiments, the cycle life stability and capacity retention properties may be improved by Mn, while electrical conductivity is maintained by including Co.

The content of Ni (e.g., the molar fraction of nickel based on the total molar amount of nickel, cobalt and manganese) in the NCM-based hydroxide may be 0.6 or more, 0.7 or more, or 0.8 or more.

In some embodiments, an average molar fraction of nickel among the transition metals of the first cathode active material precursor particles may be greater than that of the second cathode active material precursor particles. Accordingly, the charge/discharge properties may be improved through the cathode active material formed from the first cathode active material precursor particles, and cycle life properties may also be improved through the cathode active material formed from the second cathode active material precursor particles.

In one embodiment, the Ni content of the first cathode active material precursor particles may be in a range from 0.8 to 0.95, from 0.82 to 0.95, from 0.83 to 0.95, from 0.84 to 0.95, from 0.85 to 0.95, or from 0.88 to 0.95. Accordingly, the charge/discharge capacity and efficiency of a secondary battery including the cathode active material formed from the first cathode active material precursor particles may be improved.

In one embodiment, the Ni content of the second cathode active material precursor particles may be in a range from 0.8 to 0.95, from 0.80 to 0.93, from 0.80 to 0.90, or from 0.80 to 0.89. The cycle life properties of the secondary battery including the cathode active material formed from the second cathode active material precursor particles may be improved.

In some embodiments, an average molar fraction of nickel among the transition metals of the first cathode active material precursor particles may be lower than that of the second cathode active material precursor particles. For example, the average molar fraction of nickel among the transition metals of the cathode active material precursor particles may be adjusted according to the method of preparing the cathode active material precursor described below.

In one embodiment, the Ni content of the second cathode active material precursor particles may be in a range from 0.8 to 0.98, from 0.85 to 0.97, from 0.90 to 0.96, or from 0.92 to 0.95. Accordingly, the second cathode active material precursor particles having a high content of Ni may be included together with the first cathode active material precursor particles, thereby further improving the capacity properties of the secondary battery.

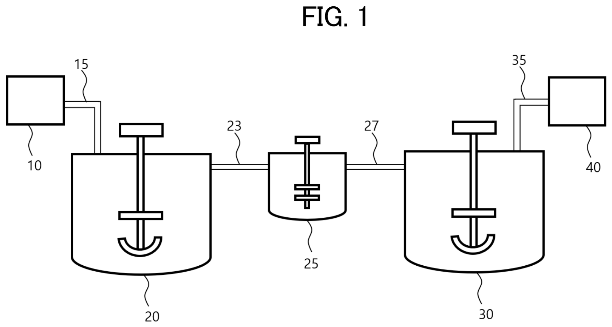

FIG. 1 is a schematic view illustrating a device for preparing a cathode active material precursor according to exemplary embodiments.

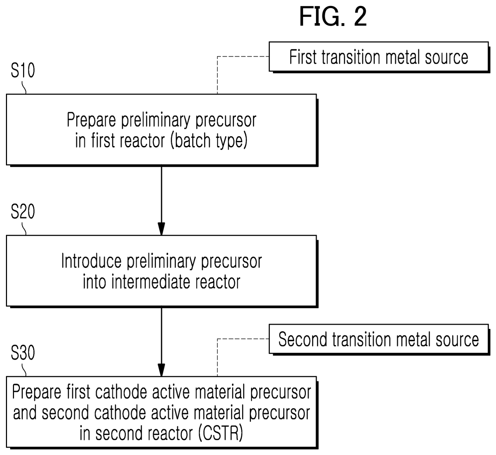

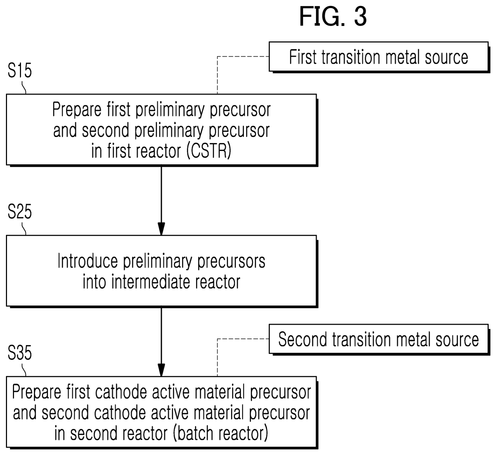

FIGS. 2 and 3 are process flowcharts illustrating a method of preparing a cathode active material precursor according to exemplary embodiments; and

Hereinafter, the method of preparing a cathode active material precursor according to exemplary embodiments will be described with reference to FIGS. 1 to 3.

In exemplary embodiments, a first transition metal source including a nickel source may be introduced into the first reactor 20 to prepare a preliminary precursor. The preliminary precursor may be a transition metal hydroxide containing nickel.

In some embodiments, the first transition metal source may include nickel. The nickel source may include, for example, nickel sulfate ($NiSO_4$), nickel hydroxide ($Ni(OH)_2$), nickel nitrate ($Ni(NO_3)_2$), nickel acetate ($Ni(CH_3CO_2)_2$), or a hydrate form thereof, and may be included in the first transition metal source in such a form.

In some embodiments, the first transition metal source may further include at least one of cobalt and manganese. For example, the first transition metal source may include cobalt and manganese together with nickel.

A cobalt source may include, for example, cobalt sulfate ($CoSO_4$), cobalt hydroxide ($Co(OH)_2$), cobalt nitrate ($Co(NO_3)_2$), cobalt carbonate ($CoCO_3$), or a hydrate form thereof, and may be included in the first transition metal source in such a form.

A manganese source may include, for example, manganese sulfate ($MnSO_4$), manganese hydroxide ($Mn(OH)_2$), manganese nitrate ($Mn(NO_3)_2$), manganese acetate ($Mn(CH_3CO_2)_2$), or a hydrate form thereof, and may be included in the first transition metal source in such a form.

In one embodiment, the nickel, the cobalt, and the manganese may be included in the first transition metal source as nickel sulfate, cobalt sulfate, and manganese sulfate, respectively. Accordingly, the pH of the first transition metal source including the nickel, the cobalt, and the manganese may be appropriately adjusted, thereby improving the coprecipitation reaction rate.

In some embodiments, the first transition metal source may further include an additional metal source. For example, the first transition metal source may further include one or more metal sources selected from the group consisting of aluminum sulfate ($Al_2(SO_4)_3$), titanium sulfate ($Ti(SO_4)_2$), tungsten hexafluoride ($WF_6$), strontium chloride ($SrCl_2$), zirconium sulfate ($Zr(SO_4)_2$), tantalum chloride ($TaCl_5$), niobium sulfate ($Nb_2(SO_4)_5$), molybdenum sulfate ($Mo(SO_4)_3$), and boron chloride ($BCl_3$). Accordingly, the charge/discharge properties of the cathode active material formed from the cathode active material precursor may be further improved.

In some embodiments, a first transition metal source including the above-described nickel may be prepared in a first transition metal input container 10, and the first transition metal source may be introduced into a first reactor 20. For example, the first transition metal source may be formed by mixing a nickel source, a cobalt source, and a manganese source in the first transition metal input container 10. For example, the first transition metal source may be continuously or intermittently supplied to the first reactor 20 through a first input line 15.

In one embodiment, the first transition metal source in an aqueous solution, formed by introducing a solvent into the first transition metal input container 10, may be supplied to the first reactor 20 through the first input line 15. For example, the solvent may include water.

An inert gas, a chelating agent, and a pH adjuster may be continuously introduced into the first reactor 20 together with the first transition metal source. Accordingly, nucleation and growth of the preliminary precursor may occur together. As a result, the preliminary precursor may be prepared in the first reactor 20.

The inert gas may include, for example, $N_2$, Ar, $H_2$, Ne, Xe, Kr and the like.

The chelating agent may include, for example, aqueous ammonia (e.g., $NH_4OH$), ammonium bicarbonate (e.g., $NH_4HCO_3$) and the like.

The pH adjuster may include, for example, ammonia, NaOH and the like.

In some embodiments, the weight ratio of the content of the chelating agent (e.g., aqueous ammonia) to the content of the first transition metal source may be 1 to 4, 1 to 3, or 2 to 3. Within this range, the preliminary precursor may be stably prepared.

For example, in the first reactor 20, the preliminary precursor may be grown to have a median particle diameter ($D_{50}$) of 8 μm to 13 μm, 9 μm to 13 μm, 9 μm to 12 μm, or 9.5 μm to 11 μm. Within this range, an additional transition metal may be stably deposited on the preliminary precursor, so that the first cathode active material precursor may be formed in a core-shell structure.

According to exemplary embodiments, the first cathode active material precursor may be prepared by introducing the preliminary precursor and a second transition metal source including a nickel into a second reactor 30.

For example, the second transition metal source may be formed from the above-described nickel source, cobalt source, and manganese source, and may have the same composition as or a different composition from the first transition metal source.

For example, the preliminary precursor formed in the first reactor 20 may serve as the core of the first cathode active material precursor. For example, the transition metal layer additionally formed in the second reactor 30 may serve as the shell of the first cathode active material precursor. Accordingly, the first cathode active material precursor may have a core-shell structure.

In some embodiments, the preliminary precursor prepared in the first reactor 20 may be introduced into the second reactor 30. For example, the preliminary precursor may be continuously supplied to the second reactor 30. For example, the preliminary precursor may be intermittently supplied to the second reactor 30.

In some embodiments, a second transition metal source including nickel may be formed in a second transition metal input container 40 and introduced into the second reactor 30. For example, the second transition metal source may be continuously supplied to the second reactor 30 through a second input line 35. For example, the second transition metal source may be intermittently supplied to the second reactor 30 through the second input line 35.

In one embodiment, a solvent may be introduced into the second transition metal input container 40, and a second transition metal source in a solution state may be supplied to the second reactor 30 through the second input line 35. For example, the solvent may include water.

An inert gas, a chelating agent, and a pH adjuster may be continuously introduced into the second reactor 30 together with the second transition metal source. Accordingly, the preliminary precursor may undergo coprecipitation reaction and particle growth. Accordingly, the first cathode active material precursor may be prepared in the second reactor 30.

The inert gas, the chelating agent, and the pH adjuster may be substantially the same as the inert gas, the chelating agent, and the pH adjuster introduced into the first reactor 20.

For example, the weight ratio of the chelating agent (e.g., aqueous ammonia) to the content of the second transition metal source may be in a range from 1 to 4, from 1 to 3, or from 2 to 3. Within this range, the first cathode active material precursor may be stably prepared.

In some embodiments, the first cathode active material precursor may be grown to have a median particle diameter (D50) of 10 $\mu$m to 18 $\mu$m, 12 $\mu$m to 18 $\mu$m, 14 $\mu$m to 18 $\mu$m, or 14 $\mu$m to 16 $\mu$m. Within the above range, the average specific surface area of the first cathode active material precursor may be sufficiently increased. Accordingly, the reaction area of the cathode active material formed from the first cathode active material precursor may be increased, thereby improving the charge/discharge properties of the secondary battery.

According to exemplary embodiments, a second cathode active material precursor having a uniform nickel content throughout an entire particle may be prepared in the first reactor 20 or the second reactor 30.

As used herein, the term "having a uniform nickel content throughout a particle" may refer to a particle that does not have a substantially core-shell structure. For example, it may refer to a particle having a uniform nickel composition measured at any two points of the particle (for example, at any two points on the particle surface or any two points inside the particle). For example, it may refer to a particle in which the difference in the nickel molar fraction measured at any two points of the particle is 0.05 or less.

For example, nuclei of the second cathode active material precursor may be formed together with the formation of a preliminary precursor in the first reactor 20.

For example, nuclei of the second cathode active material precursor may grow together with the formation of the first cathode active material precursor from the preliminary precursor in the second reactor 30.

In some embodiments, the second cathode active material precursor may be grown to have a median particle diameter (D$_{50}$) of 3 $\mu$m to 6 $\mu$m, 4 $\mu$m to 6 $\mu$m, or 4 $\mu$m to 5 $\mu$m. Within this range, an additional transition metal layer may not be formed on the second cathode active material precursor. Accordingly, the second cathode active material precursor may maintain a non-core-shell structure.

According to exemplary embodiments, each of the first reactor 20 and the second reactor 30 may be a continuous stirred tank reactor (CSTR) or a batch reactor, and the first reactor 20 and the second reactor 30 may be different reactors from each other.

For example, when the first reactor 20 is a CSTR, the second reactor 30 may be the batch reactor. Conversely, when the first reactor 20 is a batch reactor, the second reactor 30 may be the CSTR.

When only a batch reactor is used, the particle size distribution of the cathode active material precursor may become narrow. Accordingly, the cathode active material precursor may have a unimodal particle size distribution. When a cathode active material is formed from the cathode active material precursor having a unimodal particle size distribution, the electrode density of the cathode may decrease.

When only a CSTR is used, the first cathode active material precursor may not have a core-shell structure. When a cathode active material is formed from the first cathode active material precursor having a non-core-shell structure, the charge/discharge capacity may be reduced, and the structural stability of the cathode active material may decrease.

However, by using both the CSTR and the batch reactor, a bimodal cathode active material precursor may be obtained, and a cathode active material precursor having a stable core-shell structure may be prepared. Accordingly, the charge/discharge properties and cycle life properties of a secondary battery including the cathode active material formed from the cathode active material precursor may be improved.

Depending on the types of the first reactor 20 and the second reactor 30, the specific reaction sequence may vary.

For example, when the first reactor 20 is the CSTR and the second reactor 30 is the batch reactor, preliminary precursors (e.g., a first preliminary precursor and a second preliminary precursor) having different particle sizes from each other may be formed in the first reactor 20, and the first cathode active material precursor and the second cathode active material precursor may be prepared from the preliminary precursors in the second reactor 30, respectively.

For example, when the first reactor 20 is the batch reactor and the second reactor 30 is the CSTR, the preliminary precursor may be formed in the first reactor 20, the first cathode active material precursor may be prepared from the preliminary precursor in the second reactor 30, and the second cathode active material precursor may be prepared additionally.

In some embodiments, the median particle diameter ($D_{50}$) of the preliminary precursor may be greater than the median particle diameter ($D_{50}$) of the second cathode active material precursor. Accordingly, the preliminary precursor may be selectively grown. For example, the first cathode active material precursor may be formed into a core-shell structure, and the second cathode active material precursor may be formed into a non-core-shell structure. As a result, the cycle life properties and output properties of the cathode active material prepared from the first cathode active material precursor and the second cathode active material precursor may be improved together.

FIG. 2 is a schematic process flowchart illustrating a method of preparing a cathode active material precursor according to an exemplary embodiment.

Referring to FIG. 2, the first reactor 20 may be a batch reactor and the second reactor 30 may be a CSTR.

In some embodiments, when the first reactor 20 is the batch reactor, a preliminary precursor may be prepared in the first reactor 20 (e.g., process S10). For example, the preliminary precursor may be the core portion of the first cathode active material precursor. For example, a coprecipitation reaction of the first transition metal source may be performed. Thus, a core of the preliminary precursor may be formed and grown.

The coprecipitation reaction may be performed at 50 °C to 70 °C, 55 °C to 70 °C, or 55 °C to 65 °C for 10 to 30 hours, 15 to 30 hours, or 15 to 25 hours. Additionally, the coprecipitation reaction may be performed under pH conditions of 10 to 13, 10 to 12, or 11 to 12 while stirring at 500 rpm to 1,500 rpm, 700 rpm to 1,500 rpm, or 700 rpm to 1,200 rpm. Within these ranges, the preliminary precursor may be prepared in the above-described size.

In some embodiments, when the first reactor 20 is the batch reactor, the preliminary precursor prepared in the first reactor 20 may be introduced into an intermediate reactor 25 (e.g., process S20). For example, the preliminary precursor prepared in the first reactor 20 may be introduced into the intermediate reactor 25 through a first transfer line 23.

In some embodiments, the intermediate reactor 25 may be a batch reactor. Accordingly, the preliminary precursor introduced into the intermediate reactor 25 may be stirred. Furthermore, no additional transition metal source may be introduced into the intermediate reactor 25. Accordingly, no additional coprecipitation reaction may occur in the intermediate reactor 25, and the composition and particle size of the preliminary precursor may be maintained. Therefore, even if the product prepared in the first reactor 20 is stored in the intermediate reactor 25, the physical properties (e.g., particle size, etc.) of the first cathode active material precursor and the second cathode active material precursor may be adjusted solely through the first reactor 20 and the second reactor 30.

The preliminary precursor prepared in the first reactor 20 may be stored in the intermediate reactor 25, and the preliminary precursor may be introduced into the second reactor 30 without exceeding the operational level of the second reactor 30. Accordingly, the production yield of the first cathode active material precursor may be improved. For example, when the first reactor 20 is the batch reactor, the preliminary precursor prepared in the first reactor 20 may be discharged in a batch manner. When the preliminary precursor is introduced into the second reactor 30 all at once, it may exceed the level of the second reactor 30. Accordingly, the batch introduction of the preliminary precursor may reduce the production yield of the first cathode active material precursor in the second reactor 30, which is a CSTR.

The term "exceeding the operational level" as used herein may mean exceeding the optimal level at which a reaction may be smoothly performed within the reactor, or exceeding a preset level.

In some embodiments, after the preliminary precursor is introduced into the second reactor 30, which is a CSTR, the preliminary precursor may grow into the first cathode active material precursor.

In some embodiments, the above-described second transition metal source and the preliminary precursor may be introduced into the second reactor 30 to prepare the first cathode active material precursor (e.g., the shell portion of the first cathode active material precursor) and the second cathode active material precursor together (e.g., process S30).

In one embodiment, when the second reactor 30 is a CSTR, the second cathode active material precursor may be prepared along with the formation of the shell portion of the first cathode active material precursor in the second reactor 30 For example, when the second reactor 30 is the CSTR, a coprecipitation reaction of the second transition metal source may be performed in the second reactor 30. Accordingly, a transition metal layer may additionally grow on the surface of the preliminary precursor, thereby forming the first cathode active material precursor. Furthermore, nuclei of the second cathode active material precursor may be formed and grown.

The coprecipitation reaction may be performed at a temperature of 40 °C to 60 °C, 45 °C to 60 °C, or 45 °C to 55 °C, for 2 to 10 hours, 4 to 10 hours, or 4 to 8 hours. In addition, the coprecipitation reaction may be performed under pH conditions of 9 to 12, 10 to 12, or 10 to 11 while stirring at 400 rpm to 1,300 rpm, 600 rpm to 1,300 rpm, or 600 rpm to 1,000 rpm. Within these ranges, the first cathode active material precursor may grow to the above-described size.

In some embodiments, the first reactor 20 may be a batch reactor, and a content of nickel based on a total weight of the first transition metal source may be lower than a content of nickel based on a total weight of the second transition metal source. For example, the content of Ni included in the first transition metal source based on the total weight of the first transition metal source may be lower than the content of Ni included in the second transition metal source based on the total weight of the second transition metal source.

For example, after the preliminary precursor is prepared in the first reactor 20, a first cathode active material precursor may be prepared in the second reactor 30, where the nickel concentration is maintained higher than in the first reactor 20. Accordingly, the average molar fraction of nickel included in the second cathode active material precursor prepared in the second reactor 30 may be greater than that of nickel included in the first cathode active material precursor. Additionally, the relative content of Co included in the second cathode active material precursor may be reduced. Accordingly, the structural stability of the cathode active material formed from the first cathode active material precursor and the second cathode active material precursor may be improved, and the ion conductivity may be enhanced.

FIG. 3 is a schematic process flowchart illustrating a method of preparing a cathode active material precursor according to exemplary embodiments.

Referring to FIG. 3, the first reactor 20 may be a CSTR and the second reactor 30 may be a batch reactor.

In some embodiments, when the first reactor 20 is the CSTR, a first preliminary precursor and a second preliminary precursor may be prepared in the first reactor 20 (e.g., process S15). For example, the first preliminary precursor may be the core portion of the first cathode active material precursor. For example, the second preliminary precursor may be the nucleus of the second cathode active material precursor. For example, a coprecipitation reaction of the first transition metal source may be performed. Thus, the first preliminary precursor and the second preliminary precursor may be formed.

The coprecipitation reaction may be performed at 50 °C to 70 °C, 55 °C to 70 °C, or 55 °C to 65 °C for 6 to 15 hours, 8 to 15 hours, or 8 to 12 hours. The coprecipitation reaction may be carried out while stirring at 500 rpm to 1,500 rpm, 700 rpm to 1,500 rpm, or 700 rpm to 1,200 rpm under pH conditions of 10 to 13, 10 to 12, or 11 to 12. Within these ranges, the sizes of the first preliminary precursor and the second preliminary precursor may be adjusted.

In some embodiments, the median particle diameters (D50) of the first and second preliminary precursors may be different from each other.

In some embodiments, the median particle diameter of the first preliminary precursor may be greater than that of the second preliminary precursor. For example, the median particle diameter of the first preliminary precursor may be the same as that of the above-described preliminary precursor (e.g., 8 $\mu$m to 13 $\mu$m). For example, the median particle diameter of the second preliminary precursor may be smaller than that of the above-described second cathode active material precursor. For example, the median particle diameter of the second preliminary precursor may be 1 $\mu$m to 4 $\mu$m, 2 $\mu$m to 3.5 $\mu$m, or 2 $\mu$m to 3 $\mu$m. For example, particles whose median particle diameter has increased through particle growth from a seed at the initial stage of the reaction may be used as the first preliminary precursor. For example, particles generated after a certain period of time and with relatively little particle growth may be used as the second preliminary precursor.

In some embodiments, when the first reactor 20 is the CSTR, the preliminary precursor prepared in the first reactor 20 and the second cathode active material precursor may be introduced into the intermediate reactor 25 (e.g., process S25). For example, the first preliminary precursor and the second preliminary precursor prepared in the first reactor 20 may be introduced into the intermediate reactor 25 through the first transfer line 23.

When the first reactor 20 is the CSTR, a transition metal source may be continuously introduced into and discharged from the first reactor 20, and the first preliminary precursor and the second preliminary precursor produced therein may be discharged. The first and second preliminary precursors prepared in the first reactor 20 may be stored in the intermediate reactor 25. The feeding rate of the first and second preliminary precursors may be adjusted according to the reaction progress in the second reactor 30.

For example, depending on the progress of the reaction in the second reactor 30, the first preliminary precursor and the second preliminary precursor stored in the intermediate reactor 25 may be introduced into the second reactor 30 through a second transfer line 27. Accordingly, the conversion yield of precursor formation from the preliminary precursor may be improved.

The intermediate reactor 25 may be the same as the intermediate reactor 25 described above.

In some embodiments, the first preliminary precursor and the second preliminary precursor may be introduced together into the second reactor 30, which is a batch reactor, and then the first preliminary precursor may grow into a first cathode active material precursor, and the second preliminary precursor may grow into a second cathode active material precursor.

In some embodiments, the second transition metal source, the first preliminary precursor, and the second preliminary precursor may be introduced into the second reactor 30 to prepare the first cathode active material precursor (e.g., the shell portion of the first cathode active material precursor) and the second cathode active material precursor (e.g., process S35).

In one embodiment, when the second reactor 30 is a batch reactor, a shell portion may form only on the first preliminary precursor in the second reactor 30.

For example, when the second reactor 30 is the batch reactor, an additional coprecipitation reaction of a second transition metal source may be performed on the surface of the first preliminary precursor in the second reactor 30 to form a first cathode active material precursor. For example, since the particle size of the second preliminary precursor is small, the second preliminary precursor may not function as a core, and the particles may grow uniformly. In addition, the coprecipitation reaction may be concentrated on the first preliminary precursor due to the size of the first preliminary precursor, so that the growth of the second preliminary precursor may be relatively less than that of the first preliminary precursor, and thus, a shell portion may form only on the first preliminary precursor.

The coprecipitation reaction may be performed at 40 °C to 60 °C, 45 °C to 60 °C, or 45 °C to 55 °C, for 4 hours to 20 hours, 7 hours to 20 hours, or 7 hours to 15 hours. The above-described coprecipitation reaction may be performed under pH conditions of 9 to 12, 10 to 12, or 10 to 11, while stirring at 400 rpm to 1,300 rpm, 600 rpm to 1,300 rpm, or 600 rpm to 1,000 rpm. Within these ranges, the first cathode active material precursor and the second cathode active material precursor may grow to the above-described sizes.

For example, the first preliminary precursor formed in the first reactor 20 may substantially serve as the core of the first cathode active material precursor. For example, the transition metal layer additionally formed in the second reactor 30 may substantially serve as the shell of the first cathode active material precursor. Accordingly, the first cathode active material precursor may have a core-shell structure.

In some embodiments, the first reactor 20 is a CSTR, and a content of nickel based on a total weight of the first transition metal source may be greater than a content of nickel based on a total weight of the second transition metal source. For example, the content of nickel included in the first transition metal source based on the total weight of the first transition metal source may be greater than that of nickel included in the second transition metal source based on the total weight of the second transition metal source.

For example, after the first preliminary precursor and the second preliminary precursor are prepared in the first reactor 20, the first preliminary precursor and the second preliminary precursor may be grown into the first cathode active material precursor and the second cathode active material precursor, respectively, in the second reactor 30, where the nickel concentration is maintained lower than in the first reactor 20. Accordingly, the average molar fraction of nickel included in the second cathode active material precursor, which has a small particle size and is less affected by the second transition metal source, may be lower than that of nickel included in the first cathode active material precursor. In addition, the relative content of Co included in the second cathode active material precursor may increase. Accordingly, the structural stability of the cathode active material formed from the first cathode active material precursor and the second cathode active material precursor may be improved, and the ion conductivity may also be improved.

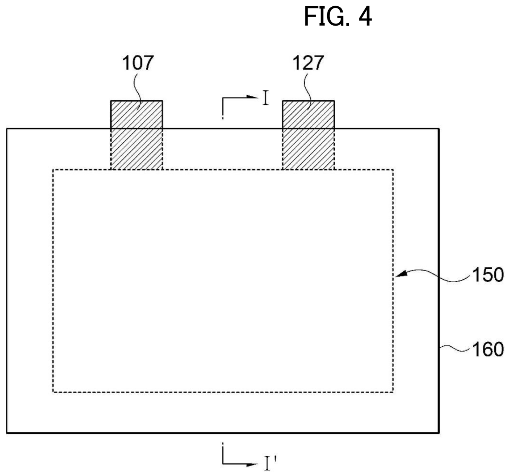

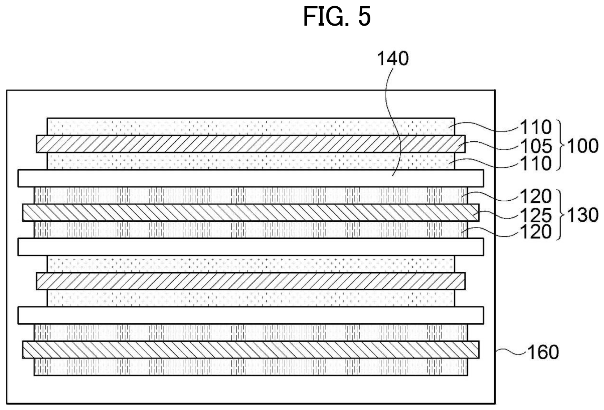

FIGS. 4 and 5 are schematic plan and cross-sectional views, respectively, illustrating a lithium secondary battery according to exemplary embodiments. For example, FIG. 5 is a cross-sectional view taken along line I-I' of FIG. 4 in the thickness direction.

Referring to FIGS. 4 and 5, the secondary battery may include a cathode 100 and an anode 130 faces to the cathode 100. A separator 140 may be interposed between the cathode 100 and the anode 130.

The cathode 100 may include a cathode current collector 105, and a cathode active material layer 110 on at least one surface of the cathode current collector 105.

The cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 $\mu$m to 50 $\mu$m.

The cathode active material layer 110 may include a cathode active material. According to exemplary embodiments, the cathode active material may include lithium transition metal oxide particles formed from the above-described cathode active material precursor.

In some embodiments, the above-described first cathode active material precursor and second cathode active material precursor may be mixed with a lithium precursor. The lithium precursor may include, for example, lithium carbonate, lithium nitrate, lithium acetate, lithium oxide, and lithium hydroxide. These precursors may be used alone or in combination of two or more thereof.

After the mixing step, a cathode active material including lithium transition metal oxide particles may be formed through a heat treatment (e.g., calcination) process. The heat treatment may be performed at 650 °C to 800 °C in an oxygen atmosphere. The high-temperature reaction within this range may reduce the amount of lithium residually present on the surface of the lithium transition metal oxide particles. Consequently, the cycle life and capacity properties of the secondary battery may be improved.

In some embodiments, the lithium transition metal oxide particles included in the cathode active material may include a layered structure or a crystal structure represented by Formula 2 below.

$$[\text{Formula 2}] \qquad Li_xNi_aM_bO_{2+z}$$

In Formula 2, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 2 indicates a bonding relationship between elements included in the layered structure or the crystal structure of the cathode active material, and does not exclude other additional elements. For example, M may include Co and/or Mn, and Co and/or Mn may be provided as main active elements of the cathode active material together with Ni. Here, it should be understood that Formula 2 is provided to express the bonding relationship between the main active elements, and is a formula encompassing the introduction and substitution of additional elements.

In some embodiments, the cathode active material may further include auxiliary elements in addition to the main active elements, in order to enhance chemical stability of the cathode active material or of the layered structure/crystal structure. The auxiliary element may be incorporated into the layered structure/crystal structure together with the main active elements to form bonds, and it should be understood that this case is also included within the chemical structure range represented by Formula 2.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or crystal structure represented by Formula 2-1 below.

$$[\text{Formula 2-1}] \qquad Li_xNi_aM1_{b01}M2_{b02}O_{2+z}$$

In Formula 2-1, M1 may include Co, Mn and/or Al. M2 may include the above-described auxiliary elements. In Formula 2-1, x, a, b01, b02 and z may satisfy $0.9 \leq x \leq 1.2$, $0.6 \leq a \leq 0.99$, $0.01 \leq b01+b02 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of lithium transition metal oxide particles, or may penetrate through the surface of the lithium transition metal oxide particles to be incorporated into the bonding structure represented by Formula 2 or Formula 2-1 above.

The cathode active material may include a nickel-cobalt-manganese (NCM)-based lithium oxide. In this case, an NCM-based lithium oxide having an increased nickel content may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the content of Ni increases, long-term storage stability and cycle life stability of the cathode or the secondary battery may be relatively reduced, and side reactions with the electrolyte may also increase. However, according to exemplary embodiments, by including Co, electrical conductivity may be maintained, while Mn may improve the cycle life stability and capacity retention properties.

The content of Ni (e.g., the molar fraction of nickel based on the total molar amount of nickel, cobalt and manganese) in the NCM-based lithium oxide may be 0.6 or more, 0.7 or more, or 0.8 or more. For example, the content of Ni may be 0.8 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may further include, for example, a lithium (Li)-rich layered oxide (LLO)/over-lithiated oxide (OLO)-based active material, a manganese (Mn)-rich active material, or a cobalt (Co)-less active material, which have a chemical structure or a crystal structure represented by Formula 3 below.

$$[\text{Formula 3}] \qquad p[Li_2MnO_3] \cdot (1-p)[Li_qJO_2]$$

In Formula 3, p and q may satisfy $0 < p < 1$, and $0.9 \leq q \leq 1.2$, and J may include at least one element selected from Mn, Ni, Co, Fe, Cr, V, Cu, Zn, Ti, Al, Mg and B.

For example, a cathode slurry may be prepared by mixing the cathode active material in a solvent. After coating the cathode slurry onto the cathode current collector 105, drying and roll-pressing may be performed to prepare the cathode active material layer 110. The coating process may be performed using methods such as gravure coating, slot die coating, simultaneous multilayer die coating, imprinting, doctor blade coating, dip coating, bar coating or casting, etc.. The cathode active material layer 110 may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrenebutadiene rubber (SBR) and the like. These may be used alone or in combination of two or more thereof.

The conductive material may be added to the cathode active material layer 110 to enhance the conductivity of the cathode active material 110 and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers; and/or metal-based conductive materials such as tin, tin oxide, and titanium oxide; and perovskite materials such as $LaSrCoO_3$, and $LaSrMnO_3$. These may be used alone or in combination of two or more thereof.

The cathode slurry may further include a thickener and/or a dispersant. In some embodiments, the cathode slurry may include a thickener such as carboxymethyl cellulose (CMC).

The anode 130 may include an anode current collector 125, and an anode active material layer 120 on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. For example, the anode current collector 125 may have a thickness of 10 μm to 50 μm.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In some embodiments, a lithium metal-containing layer deposited or coated on the anode current collector may be used as the anode active material layer. In some embodiments, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity properties. The silicon-containing material may include Si, $SiO_x$ (0<x<2), a metal-doped $SiO_x$ (0<x<2), a silicon-carbon composite, etc. The metal may include lithium and/or magnesium, and the metal-doped $SiO_x$ (0<x<2) may include a metal silicate.

For example, the anode active material may be mixed in a solvent to prepare an anode slurry. The anode slurry may be coated or deposited on the anode current collector 125, and then dried and roll-pressed to prepare the anode active material layer 120. The coating may be performed by processes such as gravure coating, slot die coating, simultaneous multilayer die coating, imprinting, doctor blade coating, dip coating, bar coating or casting, etc, but is not limited thereto. The anode active material layer 120 may further include a binder, and optionally may further include a conductive material, a thickener or the like.

In some embodiments, the anode 130 may include the anode active material layer 120 in the form of lithium metal formed through a deposition/coating process.

Non-limiting examples of solvents for the anode active material layer may include water, purified water, deionized water, distilled water, ethanol, isopropanol, methanol, acetone, n-propanol, t-butanol and the like.

The above-described materials that can be used when preparing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

The separator 140 may be interposed between the cathode 100 and the anode 130. The separator 140 may be configured to prevent an electrical short-circuit between the cathode 100 and the anode 130, and to allow the flow of ions.

For example, the separator 140 may include a porous polymer film or a porous nonwoven fabric. The porous polymer film may include a polyolefin-based polymer such as an ethylene polymer, a propylene polymer, an ethylene/-butene copolymer, an ethylene/hexene copolymer, and an ethylene/methacrylate copolymer, etc. These may be used alone or in combination of two or more thereof. The porous nonwoven fabric may include glass fibers having a high melting point, polyethylene terephthalate fibers, etc. The separator 140 may also include a ceramic-based material. For example, inorganic particles may be coated on the polymer film or dispersed within the polymer film to improve heat resistance.

The separator 140 may have a single-layer or multi-layer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt and an organic solvent. For example, the lithium salt may be represented by $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

As illustrated in FIG. 5, electrode tabs (cathode tabs and anode tabs) may protrude from the cathode current collector 105 and the anode current collector 125, respectively, which belong to each electrode cell, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical shape, a prismatic shape, a pouch shape or a coin shape using a can.

The invention is also defined by the following aspects:

Aspect 1. A cathode active material precursor for a lithium secondary battery, comprising:

first cathode active material precursor particles, each comprising a core portion and a shell portion, the core portion and the shell portion each comprising one or more transition metals including nickel; and
second cathode active material precursor particles comprising one or more transition metals including nickel,
wherein a molar fraction of nickel among the transition metals of the second cathode active material precursor particles is uniform throughout the entirety of each of the the second cathode active material precursor particles, and

wherein a median particle diameter ($D_{50}$) of the core portion of the first cathode active material precursors particles is greater than a median particle diameter ($D_{50}$) of the second cathode active material precursor particles.

Aspect 2. The cathode active material precursor for a lithium secondary battery according to aspect 1, wherein a median particle diameter ($D_{50}$) of core portions of the first cathode active material precursor particles is in a range from 8 $\mu$m to 13 $\mu$m.

Aspect 3. The cathode active material precursor for a lithium secondary battery according to any one of aspects 1 and 2, wherein a median particle diameter ($D_{50}$) of the second cathode active material precursor particles is in a range from 3 $\mu$m to 6 $\mu$m.

Aspect 4. The cathode active material precursor for a lithium secondary battery according to any one of aspects 1 to 3, wherein an average molar fraction of nickel among the transition metals of the first cathode active material precursor particles is greater than an average molar fraction of nickel among the transition metals of the second cathode active material precursor particles.

Aspect 5. The cathode active material precursor for a lithium secondary battery according to any one of aspects 1 to 4, wherein the transition metals further comprise cobalt and manganese.

Aspect 6. A cathode active material for a lithium secondary battery, comprising lithium transition metal oxide particles formed from the cathode active material precursor according to any one of aspects 1 to 5.

Aspect 7. A lithium secondary battery comprising:

a cathode comprising the cathode active material for a lithium secondary battery according to aspect 6;
an anode; and
a separator interposed between the cathode and the anode.

Aspect 8. A method of preparing a cathode active material precursor for a lithium secondary battery, the method comprising:

preparing a preliminary precursor by introducing a first transition metal source including nickel into a first reactor 20;
preparing a first cathode active material precursor having a core-shell structure by introducing the preliminary precursor and a second transition metal source including nickel into a second reactor 30; and
preparing, in at least one of the first reactor 20 and the second reactor 30, a second cathode active material precursor having a uniform nickel content throughout an entire particle,
wherein each of the first reactor 20 and the second reactor 30 is a continuous stirred tank reactor (CSTR) or a batch reactor,
and wherein the first reactor 20 and the second reactor 30 are different reactors from each other.

Aspect 9. The method according to aspect 8, wherein the first reactor 20 is the batch reactor, the second reactor 30 is the continuous stirred tank reactor (CSTR), and
wherein preparing the second cathode active material precursor is performed along with preparing the first cathode active material precursor in the second reactor 30..

Aspect 10. The method according to aspect 9, wherein preparing the second cathode active material precursor is performed along with forming a shell portion of the first cathode active material precursor.

Aspect 11. The method according to any one of aspects 8 to 10, wherein the first reactor 20 is the continuous stirred tank reactor (CSTR), the second reactor 30 is the batch reactor, and

wherein preparing the preliminary precursor comprises preparing, in the first reactor 20, a first preliminary precursor and a second preliminary precursor having different median particle diameters ($D_{50}$) from each other, and
wherein preparing the second cathode active material precursor comprises introducing the second preliminary precursor and the second transition metal source into the second reactor 30 to prepare the second cathode active material precursor.

Aspect 12. The method according to aspect 11, wherein the first preliminary precursor and the second preliminary precursor prepared in the first reactor 20 are introduced together into the second reactor 30, and
wherein preparing the first cathode active material precursor comprises forming a shell portion only on the first preliminary precursor introduced into the second reactor 30.

Aspect 13. The method according to any one of aspects 8 to 12, wherein the first reactor 20 is the continuous stirred tank reactor (CSTR), and
wherein a content of nickel based on a total weight of the first transition metal source is greater than a content of nickel based on a total weight of the second transition metal source.

Aspect 14. The method according to any one of aspects 8 to 13, wherein the first reactor 20 is the batch reactor, and wherein a content of nickel based on a total weight of the first transition metal source is lower than a content of nickel based on a total weight of the second transition metal source.

Aspect 15. The method according to any one of aspects 8 to 14, further comprising introducing the preliminary precursor into an intermediate reactor 25 before introducing the preliminary precursor into the second reactor 30.

Examples and Comparative Examples

Example **1**

(1) Preparation of cathode active material precursor

$NiSO_4$, $CoSO_4$ and $MnSO_4$ were introduced into a first transition metal storage container in a molar ratio of 86:7:7, followed by the addition of water to prepare a first transition metal source.

The first transition metal source was introduced into a batch reactor, and the mixture was stirred while continuously supplying $N_2$ as an inert gas, $NH_4OH$ as a chelating agent, and $NaOH$ as a pH adjuster, to prepare a preliminary precursor having a composition of $Ni_{0.86}Co_{0.07}Mn_{0.07}(OH)_2$.

The median particle diameter (D50) of the preliminary precursor was 10 $\mu$m.

The prepared preliminary precursor was introduced into an intermediate reactor.

$NiSO_4$, $CoSO_4$ and $MnSO_4$ were introduced into a second transition metal storage container in a molar ratio of 95:4:1, followed by the addition of water to prepare a second transition metal source.

The second transition metal source and the preliminary precursor were introduced into a continuous stirred tank reactor (CSTR), and the mixture was stirred while continuously supplying $N_2$ as an inert gas, $NH_4OH$ as a chelating agent, and $NaOH$ as a pH adjuster, to prepare a first cathode active material precursor having a composition of $Ni_{0.92}Co_{0.05}Mn_{0.03}(OH)_2$ and a second cathode active material precursor having a composition of $Ni_{0.95}Co_{0.04}Mn_{0.01}(OH)_2$.

The median particle diameter ($D_{50}$) of the first cathode active material precursor was 15 $\mu$m, and the median particle diameter ($D_{50}$) of the second cathode active material precursor was 4.5 $\mu$m.

The median particle diameter ($D_{50}$) was calculated by dispersing the preliminary precursor, the first cathode active material precursor, and the second cathode active material precursor in a dispersion medium (a 10 wt% aqueous dispersion of sodium hexametaphosphate ($NaPO_3)_6$) and measuring the difference in diffraction patterns according to particle size using a laser diffraction particle size analyzer (Microtrac MT 3000).

(2) Preparation of cathode active material

Lithium hydroxide (LiOH) as a lithium source was calcined at 750°C for 10 hours in an oxygen atmosphere. The calcined lithium source, the first cathode active material precursor, and the second cathode active material precursor were mixed in a molar ratio of 2.1:1:1, and then calcined at 765°C for 20 hours in an oxygen atmosphere. Thereafter, the cathode active material in the form of lithium transition metal oxide particles was prepared through crushing, washing, and post-calcination at 300 °C.

(3) Manufacture of lithium secondary battery

The cathode active material, Denka Black as a conductive material, and PVDF as a binder were mixed in a mass ratio of 92:5:3 to prepare a cathode slurry.

The cathode was prepared by coating the cathode slurry onto an aluminum current collector, followed by drying and pressing.

An anode slurry, which included 95 wt% of an anode active material obtained by mixing artificial graphite and natural graphite at a weight ratio of 7:3, 1 wt% of Super-P as a conductive material, 2 wt% of styrene-butadiene rubber (SBR) as a binder, and 2 wt% of carboxymethyl cellulose (CMC) as a thickener, was prepared. The anode was prepared by uniformly coating the anode slurry onto a copper foil, followed by drying and pressing.

The cathode and anode fabricated as described above were each cut to a predetermined size and stacked. A separator (polyethylene, thickness: 15 $\mu$m) was interposed between the cathode and anode to form a cell, and the tab portion of the cathode and the tab portion of the anode were respectively welded. The assembly of the welded cathode/separator/anode was placed into a pouch, and three sides of the pouch were sealed, leaving one side open for electrolyte injection. At this time, a portion having the electrode tab was included in the sealed part. After injecting the electrolyte through the electrolyte injection side, the remaining electrolyte injection side was also sealed, and the cell was left to be impregnated for 12 hours or more to manufacture a lithium secondary battery.

A solution, prepared by adding 3 wt% fluoroethylene carbonate (FEC), 1 wt% of 1,3-propene sultone (PRS), and 0.5 wt% of lithium bis(oxalato)borate (LiBOB) to a 1 M LiPF$_6$ solution in a mixed solvent of EC/EMC/DEC (25/45/30 volume ratio), was used as the electrolyte.

Subsequently, a pre-charging process was performed for 36 minutes at a current of 2.5 A corresponding to 0.25C. After standing for 1 hour, degassing was performed, followed by aging for 24 hours or more, and then formation charge-discharge cycles were performed (charging conditions: CC-CV 0.2C, 4.2 V, 0.05C cut-off; discharging conditions: CC 0.2C, 2.5 V cut-off). Thereafter, standard charging and discharging processes were performed (charging conditions: CC-CV 0.5C, 4.2 V, 0.05C cut-off; discharging conditions: CC 0.5C, 2.5 V cut-off).

### Examples 2 to 6

Cathode active materials and lithium secondary batteries were manufactured in the same manner as in Example 1, except that the contents of NiSO$_4$, CoSO$_4$ and MnSO$_4$ included in the first transition metal source and second transition metal source, and the compositions and median particle diameters (D$_{50}$) of the preliminary precursor, the first cathode active material precursor, and the second cathode active material precursor were changed as shown in Table 1 and Table 2 below.

### Example 7

A cathode active material and a lithium secondary battery were manufactured in the same manner as in Example 1, except that the cathode active material precursor was prepared as follows.

Preparation of cathode active material precursor

NiSO$_4$, CoSO$_4$ and MnSO$_4$ were introduced into a first transition metal storage container in a molar ratio of 96:2:2, followed by the addition of water to prepare a first transition metal source.

The first transition metal source was introduced into a CSTR, and the mixture was stirred while continuously supplying N$_2$ as an inert gas, NH$_4$OH as a chelating agent, and NaOH as a pH adjuster to prepare a first preliminary precursor having a composition of Ni$_{0.96}$Co$_{0.02}$Mn$_{0.02}$(OH)$_2$, and a second preliminary precursor having a composition of Ni$_{0.96}$Co$_{0.02}$Mn$_{0.02}$(OH)$_2$.

The median particle diameter (D$_{50}$) of the first preliminary precursor was 10 $\mu$m, and the median particle diameter (D$_{50}$) of the second preliminary precursor was 3.0 $\mu$m.

The prepared first and second preliminary precursors were introduced into an intermediate reactor.

NiSO$_4$, CoSO$_4$ and MnSO$_4$ were introduced into a second transition metal storage container in a molar ratio of 90:6:4, followed by the addition of water to prepare a second transition metal source.

The second transition metal source and the preliminary precursors were introduced into a batch reactor, and the mixture was stirred while continuously supplying N$_2$ as an inert gas, NH$_4$OH as a chelating agent, and NaOH as a pH adjuster to prepare a first cathode active material precursor having a composition of Ni$_{0.92}$Co$_{0.05}$Mn$_{0.03}$(OH)$_2$ and a second cathode active material precursor having a composition of Ni$_{0.91}$Co$_{0.06}$Mn$_{0.03}$(OH)$_2$.

The median particle diameter (D$_{50}$) of the first cathode active material precursor was 15 $\mu$m, and the median particle diameter (D$_{50}$) of the second cathode active material precursor was 4.5 $\mu$m.

### Examples 8 to 12

Cathode active materials and lithium secondary batteries were manufactured in the same manner as in Example 7, except that the compositions and the median particle diameters (D$_{50}$) of the first preliminary precursor, the first cathode active material precursor, and the second cathode active material precursor were changed as shown in Table 1 and Table 2, by varying the contents of NiSO$_4$, CoSO$_4$ and MnSO$_4$ included in the first transition metal source and the second transition metal source.

### Comparative Example 1

A lithium secondary battery was manufactured in the same manner as in Example 1, except that the compositions and the median particle diameters (D$_{50}$) of the preliminary precursor, the first cathode active material precursor, and the second cathode active material precursor were changed as shown in Table 1 and Table 2, by varing the contents of NiSO$_4$, CoSO$_4$ and MnSO$_4$ included in the first transition metal source and the second transition metal source, and the stirring conditions.

**Comparative Example 2**

A lithium secondary battery was manufactured in the same manner as in Example 7, except that the compositions and the median particle diameters ($D_{50}$) of the preliminary precursor, the first cathode active material precursor, and the second cathode active material precursor were changed as shown in Table 1 and Table 2, by varying the contents of $NiSO_4$, $CoSO_4$ and $MnSO_4$ included in the first transition metal source and the second transition metal source, and the stirring conditions.

**Comparative Example 3**

A cathode active material and a lithium secondary battery were manufactured in the same manner as in Example 1, except that the cathode active material precursor was prepared as follows.

Preparation of cathode active material precursor

$NiSO_4$, $CoSO_4$ and $MnSO_4$ were introduced into a transition metal storage container in a molar ratio of 89.5:6.5:4, followed by the addition of water to prepare a transition metal source.
The transition metal source was introduced into a CSTR, and the mixture was stirred while continuously supplying $N_2$ as an inert gas, $NH_4OH$ as a chelating agent, and NaOH as a pH adjuster, to prepare a first cathode active material precursor and a second cathode active material precursor, both having a composition of $Ni_{0.895}Co_{0.065}Mn_{0.040}(OH)_2$.
The second cathode active material precursor was obtained when it had a median particle diameter ($D_{50}$) of 4.5 $\mu$m, and the first cathode active material precursor was obtained when it had a median particle diameter ($D_{50}$) of 15 $\mu$m.

**Comparative Examples 4 to 6**

Lithium secondary batteries were manufactured in the same manner as in Comparative Example 3, except that the compositions of the first cathode active material precursor and the second cathode active material precursor were changed as shown in Table 1, by varying the contents of $NiSO_4$, $CoSO_4$ and $MnSO_4$ included in the first transition metal source and the second transition metal source.

**Comparative Example 7**

A lithium secondary battery was manufactured in the same manner as in Example 1, except that the cathode active material precursor was prepared as follows.

Preparation of cathode active material precursor

$NiSO_4$, $CoSO_4$ and $MnSO_4$ were introduced into a transition metal storage container in a molar ratio of 92:5:3, followed by the addition of water to prepare a first transition metal source. $NiSO_4$, $CoSO_4$ and $MnSO_4$ were then introduced into a transition metal storage container in a molar ratio of 89.5:6.5:4, followed by the addition of water to prepare a second transition metal source.
The transition metal sources were introduced into the first batch reactor and the second batch reactor, respectively, and the mixture was stirred while continuously supplying $N_2$ as an inert gas, $NH_4OH$ as a chelating agent, and NaOH as a pH adjuster, to prepare a first cathode active material precursor having a composition of $Ni_{0.92}Co_{0.05}Mn_{0.03}(OH)_2$ from the first batch reactor, and a second cathode active material precursor having a composition of $Ni_{0.995}Co_{0.065}Mn_{0.04}(OH)_2$ from the second batch reactor.
The median particle diameter ($D_{50}$) of the first cathode active material precursor was 15 $\mu$m, and the median particle diameter ($D_{50}$) of the second cathode active material precursor was 4.5 $\mu$m.

**Comparative Example 8**

A lithium secondary battery was manufactured in the same manner as in Comparative Example 7, except that the compositions of the first cathode active material precursor and the second cathode active material precursor were changed as shown in Table 1, by varying the contents of $NiSO_4$, $CoSO_4$ and $MnSO_4$ included in the the first transition metal source and the second transition metal source.

## Comparative Example 9

A lithium secondary battery was manufactured in the same manner as in Example 1, except that the cathode active material precursor was prepared as follows.

Preparation of cathode active material precursor

$NiSO_4$, $CoSO_4$ and $MnSO_4$ were introduced into a transition metal storage container in a molar ratio of 92:5:3, followed by the addition of water to prepare a first transition metal source. $NiSO_4$, $CoSO_4$ and $MnSO_4$ were then introduced into a transition metal storage container in a molar ratio of 89.5:6.5:4, followed by the addition of water to prepare a second transition metal source.

The transition metal sources were introduced into the first batch reactor and the second batch reactor, respectively, and a coprecipitation reaction was performed by stirring the mixture while continuously supplying $N_2$ as an inert gas, $NH_4OH$ as a chelating agent, and $NaOH$ as a pH adjuster, to prepare intermediate products, respectively.

The transition metal source was further introduced into the first batch reactor and the second batch reactor. Subsequently, the mixture was stirred while continuously supplying $N_2$ as an inert gas, $NH_4OH$ as a chelating agent, and $NaOH$ as a pH adjuster, to prepare a first cathode active material precursor having a composition of $Ni_{0.92}Co_{0.05}Mn_{0.03}(OH)_2$ from the first batch reactor and a second cathode active material precursor having a composition of $Ni_{0.895}Co_{0.065}Mn_{0.04}(OH)_2$ from the second batch reactor.

The median particle diameter ($D_{50}$) of the first cathode active material precursor was 15 $\mu$m, and the median particle diameter ($D_{50}$) of the second cathode active material precursor was 4.5 $\mu$m.

## Comparative Example 10

A lithium secondary battery was manufactured in the same manner as in Comparative Example 9, except that the compositions of the first cathode active material precursor and the second cathode active material precursor were changed as shown in Table 1, by varying the contents of $NiSO_4$, $CoSO_4$ and $MnSO_4$ included in the first transition metal source and the second transition metal source.

[TABLE 1]

| | Synthesis sequence | Composition | | |
|---|---|---|---|---|
| | | Preliminary precursor | First cathode active material precursor | Second cathode active material precursor |
| Example 1 | Batch type →CSTR | $Ni_{0.86}Co_{0.07}Mn_{0.07}(OH)_2$ | $Ni_{0.92}Co_{0.05}Mn_{0.03}(OH)_2$ | $Ni_{0.95}Co_{0.04}Mn_{0.01}(OH)_2$ |
| Example 2 | Batch type →CSTR | $Ni_{0.89}Co_{0.04}Mn_{0.07}(OH)_2$ | $Ni_{0.92}Co_{0.05}Mn_{0.03}(OH)_2$ | $Ni_{0.93}Co_{0.05}Mn_{0.02}(OH)_2$ |
| Example 3 | Batch type →CSTR | $Ni_{0.86}Co_{0.07}Mn_{0.07}(OH)_2$ | $Ni_{0.92}Co_{0.05}Mn_{0.03}(OH)_2$ | $Ni_{0.93}Co_{0.05}Mn_{0.02}(OH)_2$ |
| Example 4 | Batch type →CSTR | $Ni_{0.86}Co_{0.07}Mn_{0.07}(OH)_2$ | $Ni_{0.92}Co_{0.05}Mn_{0.03}(OH)_2$ | $Ni_{0.95}Co_{0.04}Mn_{0.01}(OH)_2$ |
| Example 5 | Batch type →CSTR | $Ni_{0.86}Co_{0.07}Mn_{0.07}(OH)_2$ | $Ni_{0.92}Co_{0.05}Mn_{0.03}(OH)_2$ | $Ni_{0.94}Co_{0.04}Mn_{0.02}(OH)_2$ |
| Example 6 | Batch type →CSTR | $Ni_{0.86}Co_{0.07}Mn_{0.07}(OH)_2$ | $Ni_{0.92}Co_{0.05}Mn_{0.03}(OH)_2$ | $Ni_{0.94}Co_{0.04}Mn_{0.02}(OH)_2$ |
| Example 7 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.91}Co_{0.06}Mn_{0.03}(OH)_2$ |
| Example 8 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.92}Co_{0.04}Mn_{0.04}(OH)_2$ |
| Example 9 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.91}Co_{0.06}Mn_{0.03}(OH)_2$ |
| Example 10 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.88}Co_{0.08}Mn_{0.04}(OH)_2$ |

(continued)

| | Synthesis sequence | Composition | | |
|---|---|---|---|---|
| | | Preliminary precursor | First cathode active material precursor | Second cathode active material precursor |
| Example 11 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.89}Co_{0.07}Mn_{0.03}(OH)_2$ |
| Example 12 | CSTR→ Batch type | $N_{0.96}Co_{0.02}Mn_{0.02}(OH)_2$ | $Ni_{0.92}Co_{0.05}Mn_{0.03}(OH)_2$ | $Ni_{0.9}Co_{0.06}Mn_{0.04}(OH)_2$ |
| Comparative Example 1 | Batch type →CSTR | $N_{0.96}Co_{0.02}Mn_{0.02}(OH)_2$ | $Ni_{0.92}Co_{0.05}Mn_{0.03}(OH)_2$ | $Ni_{0.92}Co_{0.05}Mn_{0.03}(OH)_2$ |
| Comparative Example 2 | CSTR→ Batch type | $Ni_{0.86}Co_{0.07}Mn_{0.07}(OH)_2$ | $Ni_{0.92}Co_{0.05}Mn_{0.03}(OH)_2$ | $Ni_{0.93}Co_{0.05}Mn_{0.02}(OH)_2$ |
| Comparative Example 3 | CSTR | - | $Ni_{0.895}Co_{0.065}Mn_{0.04}(OH)_2$ | $Ni_{0.895}Co_{0.065}Mn_{0.04}(OH)_2$ |
| Comparative Example 4 | CSTR | - | $Ni_{0.9}Co_{0.06}Mn_{0.04}(OH)_2$ | $Ni_{0.9}Co_{0.06}Mn_{0.04}(OH)_2$ |
| Comparative Example 5 | CSTR | - | $Ni_{0.906}Co_{0.055}Mn_{0.039}(OH)_2$ | $Ni_{0.906}Co_{0.055}Mn_{0.039}(OH)_2$ |
| Comparative Example 6 | CSTR | - | $Ni_{0.915}Co_{0.048}Mn_{0.037}(OH)_2$ | $Ni_{0.915}Co_{0.04}Mn_{0.037}(OH)_2$ |
| Comparative Example 7 | Batch type | - | $Ni_{0.92}Co_{0.05}Mn_{0.03}(OH)_2$ | $Ni_{0.895}Co_{0.065}Mn_{0.04}(OH)_2$ |
| Comparative Example 8 | Batch type | - | $Ni_{0.92}Co_{0.05}Mn_{0.03}(OH)_2$ | $Ni_{0.83}Co_{0.1}Mn_{0.07}(OH)_2$ |
| Comparative Example 9 | Batch type | - | $Ni_{0.92}Co_{0.05}Mn_{0.03}(OH)_2$ | $Ni_{0.895}Co_{0.065}Mn_{0.04}(OH)_2$ |
| Comparative Example 10 | Batch type | - | $Ni_{0.92}Co_{0.05}Mn_{0.03}(OH)_2$ | $Ni_{0.93}CO_{0.1}Mn_{0.07}(OH)_2$ |

[TABLE 2]

| Classification | Median particle diameter ($D_{50}$, μm) | | |
|---|---|---|---|
| | (First) preliminary precursor | First cathode active material precursor | Second cathode active material precursor |
| Example 1 | 10 | 15 | 4.5 |
| Example 2 | 10 | 15 | 4.5 |
| Example 3 | 8 | 13 | 4.5 |
| Example 4 | 14 | 17 | 4.5 |
| Example 5 | 10 | 12 | 2 |
| Example 6 | 10 | 15 | 7 |
| Example 7 | 10 | 15 | 4.5 |
| Example 8 | 10 | 15 | 4.5 |
| Example 9 | 7 | 13 | 4.5 |
| Example 10 | 14 | 20 | 4.5 |
| Example 11 | 10 | 15 | 2 |
| Example 12 | 10 | 15 | 7 |

(continued)

| Classification | Median particle diameter ($D_{50}$, $\mu$m) | | |
|---|---|---|---|
| | (First) preliminary precursor | First cathode active material precursor | Second cathode active material precursor |
| Comparative Example 1 | 7 | 15 | 7 |
| Comparative Example 2 | 7 | 15 | 7 |
| Comparative Example 3 | - | 15 | 4.5 |
| Comparative Example 4 | - | 15 | 4.5 |
| Comparative Example 5 | - | 15 | 4.5 |
| Comparative Example 6 | - | 15 | 4.5 |
| Comparative Example 7 | - | 15 | 4.5 |
| Comparative Example 8 | - | 15 | 4.5 |
| Comparative Example 9 | - | 15 | 4.5 |
| Comparative Example 10 | - | 15 | 4.5 |

**Experimental Examples**

(1) Evaluation of initial capacity efficiency

The lithium secondary batteries manufactured according to the examples and comparative examples were each charged (CC-CV 0.1C, 0.01 V, 0.01C cut-off) and discharged *(CC* 0.1C, 1.5 V cut-off) once at room temperature (25 °C), and the initial charge capacity and initial discharge capacity were measured.
The measured initial discharge capacity was calculated as a percentage of the initial charge capacity, and the initial capacity efficiency (%) was calculated as follows.

$$\text{Initial capacity efficiency (\%)} = (\text{Initial discharge capacity} / \text{Initial charge capacity}) \times 100$$

(2) Evaluation of cycle life properties at room temperature (25 °C)
The lithium secondary batteries manufactured according to the examples and comparative examples were each charged (CC-CV 0.5C, 4.2 V, 0.05C cut-off) and discharged (CC 0.5C, 2.75 V cut-off) for 50 cycles. The discharge capacity at the 50th cycle was calculated as a percentage of the discharge capacity at the first cycle, and the room-temperature cycle life property (%) was calculated as follows.

Capacity retention at Room temperature (%) = (Discharge capacity at 50th cycle / Discharge capacity at 1st cycle) $\times$ 100

The evaluation results are shown in Table 3 below.

[TABLE 3]

| | Initial charge capacity (mAh/g) | Initial discharge capacity (mAh/g) | Initial capacity efficiency (%) | Capacity retention (%) |
|---|---|---|---|---|
| Example 1 | 238.0 | 217.3 | 91.3 | 90.7 |
| Example 2 | 238.4 | 217.2 | 91.1 | 90.5 |
| Example 3 | 238.6 | 216.4 | 90.7 | 89.4 |
| Example 4 | 238.8 | 216.4 | 90.6 | 89.6 |
| Example 5 | 238.7 | 216.0 | 90.5 | 89.7 |
| Example 6 | 238.4 | 215.8 | 90.5 | 89.5 |

(continued)

|  | Initial charge capacity (mAh/g) | Initial discharge capacity (mAh/g) | Initial capacity efficiency (%) | Capacity retention (%) |
|---|---|---|---|---|
| Example 7 | 238.8 | 216.8 | 90.8 | 90.1 |
| Example 8 | 239.2 | 216.2 | 90.4 | 89.8 |
| Example 9 | 238.4 | 215.0 | 90.2 | 89.7 |
| Example 10 | 238.6 | 215.0 | 90.1 | 89.6 |
| Example 11 | 238.7 | 215.3 | 90.2 | 89.6 |
| Example 12 | 238.8 | 215.6 | 90.3 | 89.7 |
| Comparative Example 1 | 238.9 | 214.5 | 89.8 | 88.8 |
| Comparative Example 2 | 238.7 | 214.6 | 89.9 | 88.7 |
| Comparative Example 3 | 238.2 | 214.9 | 90.2 | 88.3 |
| Comparative Example 4 | 238.6 | 214.7 | 90.0 | 88.1 |
| Comparative Example 5 | 238.9 | 214.3 | 89.7 | 87.8 |
| Comparative Example 6 | 239.4 | 213.5 | 89.2 | 87.5 |
| Comparative Example 7 | 238.8 | 218.0 | 91.3 | 88.8 |
| Comparative Example 8 | 239.1 | 217.8 | 91.1 | 88.7 |
| Comparative Example 9 | 238.9 | 216.4 | 90.6 | 89.1 |
| Comparative Example 10 | 239.0 | 216.1 | 90.4 | 89.1 |

Referring to Table 3, in examples where both a CSTR and a batch reactor were used and the median particle diameter ($D_{50}$) of the preliminary precursor was greater than the median particle diameter ($D_{50}$) of the second cathode active material precursor, the room temperature capacity retentions were 89.4% or more.

In the comparative examples in which only one reactor, either a CSTR or a batch reactor, was used, the capacity retention at room temperature was reduced.

## Claims

1. A cathode active material precursor for a lithium secondary battery, comprising:

   first cathode active material precursor particles, each comprising a core portion and a shell portion, the core portion and the shell portion each comprising one or more transition metals including nickel; and
   second cathode active material precursor particles comprising one or more transition metals including nickel, wherein a molar fraction of nickel among the transition metals of the second cathode active material precursor particles is uniform throughout the entirety of each of the the second cathode active material precursor particles, and
   wherein a median particle diameter ($D_{50}$) of the core portion of the first cathode active material precursors particles is greater than a median particle diameter ($D_{50}$) of the second cathode active material precursor particles.

2. The cathode active material precursor for a lithium secondary battery according to claim 1, wherein a median particle diameter ($D_{50}$) of core portions of the first cathode active material precursor particles is in a range from 8 $\mu$m to 13 $\mu$m.

3. The cathode active material precursor for a lithium secondary battery according to any one of claims 1 and 2, wherein a median particle diameter ($D_{50}$) of the second cathode active material precursor particles is in a range from 3 $\mu$m to 6 $\mu$m.

4. The cathode active material precursor for a lithium secondary battery according to any one of claims 1 to 3, wherein an average molar fraction of nickel among the transition metals of the first cathode active material precursor particles is greater than an average molar fraction of nickel among the transition metals of the second cathode active material precursor particles.

5. The cathode active material precursor for a lithium secondary battery according to any one of claims 1 to 4, wherein the transition metals further comprise cobalt and manganese.

6. A cathode active material for a lithium secondary battery, comprising lithium transition metal oxide particles formed from the cathode active material precursor according to any one of claims 1 to 5.

7. A lithium secondary battery comprising:

a cathode comprising the cathode active material for a lithium secondary battery according to claim 6;
an anode; and
a separator interposed between the cathode and the anode.

8. A method of preparing a cathode active material precursor for a lithium secondary battery, the method comprising:

preparing a preliminary precursor by introducing a first transition metal source including nickel into a first reactor 20;
preparing a first cathode active material precursor having a core-shell structure by introducing the preliminary precursor and a second transition metal source including nickel into a second reactor 30; and
preparing, in at least one of the first reactor 20 and the second reactor 30, a second cathode active material precursor having a uniform nickel content throughout an entire particle,
wherein each of the first reactor 20 and the second reactor 30 is a continuous stirred tank reactor (CSTR) or a batch reactor,
and wherein the first reactor 20 and the second reactor 30 are different reactors from each other.

9. The method according to claim 8, wherein the first reactor 20 is the batch reactor, the second reactor 30 is the continuous stirred tank reactor (CSTR), and
wherein preparing the second cathode active material precursor is performed along with preparing the first cathode active material precursor in the second reactor 30.

10. The method according to claim 9, wherein preparing the second cathode active material precursor is performed along with forming a shell portion of the first cathode active material precursor.

11. The method according to any one of claims 8 to 10, wherein the first reactor 20 is the continuous stirred tank reactor (CSTR), the second reactor 30 is the batch reactor, and

wherein preparing the preliminary precursor comprises preparing, in the first reactor 20, a first preliminary precursor and a second preliminary precursor having different median particle diameters ($D_{50}$) from each other, and
wherein preparing the second cathode active material precursor comprises introducing the second preliminary precursor and the second transition metal source into the second reactor 30 to prepare the second cathode active material precursor.

12. The method according to claim 11, wherein the first preliminary precursor and the second preliminary precursor prepared in the first reactor 20 are introduced together into the second reactor 30, and
wherein preparing the first cathode active material precursor comprises forming a shell portion only on the first preliminary precursor introduced into the second reactor 30.

13. The method according to any one of claims 8 to 12, wherein the first reactor 20 is the continuous stirred tank reactor (CSTR), and
wherein a content of nickel based on a total weight of the first transition metal source is greater than a content of nickel based on a total weight of the second transition metal source.

14. The method according to any one of claims 8 to 13, wherein the first reactor 20 is the batch reactor, and
wherein a content of nickel based on a total weight of the first transition metal source is lower than a content of nickel based on a total weight of the second transition metal source.

**15.** The method according to any one of claims 8 to 14, further comprising introducing the preliminary precursor into an intermediate reactor 25 before introducing the preliminary precursor into the second reactor 30.

FIG. 1

FIG. 2

S10

First transition metal source

Prepare preliminary precursor
in first reactor (batch type)

S20

Introduce preliminary precursor
into intermediate reactor

Second transition metal source

S30

Prepare first cathode active material precursor
and second cathode active material precursor
in second reactor (CSTR)

FIG. 3

S15

First transition metal source

Prepare first preliminary precursor
and second preliminary precursor
in first reactor (CSTR)

S25

Introduce preliminary precursors
into intermediate reactor

Second transition metal source

S35

Prepare first cathode active material precursor
and second cathode active material precursor
in second reactor (batch reactor)

# FIG. 4

FIG. 5

Europäisches
Patentamt
European
Patent Office
Office européen
des brevets

# EUROPEAN SEARCH REPORT

**Application Number**

EP 25 21 4411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/084633 A1 (YOON JU HAN [KR] ET AL) 16 March 2023 (2023-03-16) | 1-7 | INV.<br>C01G53/05 |
| Y | * paragraphs [0009] - [0016], [0033] - [0053], [0057] - [0064], [0070] - [0076], [0077] - [0084], [0087] - [0101], [0148] - [0156]; example 1 * | 8-15 | C01G53/42<br>C01G53/84 |
| | ----- | | |
| X | US 2022/009791 A1 (YANG SONG YI [KR] ET AL) 13 January 2022 (2022-01-13) | 1-7 | |
| Y | * paragraphs [0013] - [0014], [0030] - [0057], [0058] - [0064], [0009] - [0127]; example 1 * | 8-15 | |
| | ----- | | |
| Y | US 2023/231113 A1 (CHOI JI HOON [KR] ET AL) 20 July 2023 (2023-07-20)<br>* paragraphs [0025], [0031], [82107], [0119] - [0131], [0156] - [0164]; example 1 * | 8-15 | |
| | ----- | | |
| A | US 2020/144602 A1 (HONG MINGZI [KR] ET AL) 7 May 2020 (2020-05-07)<br>* the whole document * | 1-15 | **TECHNICAL FIELDS SEARCHED (IPC)**<br><br>C01G |
| | ----- | | |

The present search report has been drawn up for all claims

| Place of search | Date of completion of the search | Examiner |
|---|---|---|
| Munich | 8 April 2026 | Lecerf, Nicolas |

EPO FORM 1503 03.82 (P04C01)

## ANNEX TO THE EUROPEAN SEARCH REPORT
## ON EUROPEAN PATENT APPLICATION NO.

EP 25 21 4411

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | Publication date | Patent family member(s) | | Publication date |
|---|---|---|---|---|
| US 2023084633 A1 | 16-03-2023 | CN | 115052840 A | 13-09-2022 |
| | | EP | 4089054 A1 | 16-11-2022 |
| | | JP | 7439284 B2 | 27-02-2024 |
| | | JP | 2023515153 A | 12-04-2023 |
| | | KR | 20210147515 A | 07-12-2021 |
| | | US | 2023084633 A1 | 16-03-2023 |
| | | US | 2025006919 A1 | 02-01-2025 |
| | | WO | 2021241995 A1 | 02-12-2021 |
| US 2022009791 A1 | 13-01-2022 | CN | 113056440 A | 29-06-2021 |
| | | EP | 3872037 A1 | 01-09-2021 |
| | | JP | 7292655 B2 | 19-06-2023 |
| | | JP | 2022507969 A | 18-01-2022 |
| | | KR | 20200066245 A | 09-06-2020 |
| | | US | 2022009791 A1 | 13-01-2022 |
| | | WO | 2020111898 A1 | 04-06-2020 |
| US 2023231113 A1 | 20-07-2023 | CN | 116454224 A | 18-07-2023 |
| | | EP | 4227269 A1 | 16-08-2023 |
| | | KR | 20230109887 A | 21-07-2023 |
| | | US | 2023231113 A1 | 20-07-2023 |
| US 2020144602 A1 | 07-05-2020 | CN | 111146437 A | 12-05-2020 |
| | | EP | 3647270 A1 | 06-05-2020 |
| | | HU | E063454 T2 | 28-01-2024 |
| | | JP | 7022730 B2 | 18-02-2022 |
| | | JP | 2020072091 A | 07-05-2020 |
| | | KR | 20200050747 A | 12-05-2020 |
| | | PL | 3647270 T3 | 03-01-2024 |
| | | US | 2020144602 A1 | 07-05-2020 |

EPO FORM P0459

For more details about this annex : see Official Journal of the European Patent Office, No. 12/82